# EUROPÄISCHE PATENTSCHRIFT

(11) **EP 1 100 664 B1**
(45) Veröffentlichungstag und Bekanntmachung des Hinweises auf die Patenterteilung: **23.10.2002**
(21) Anmeldenummer: 99941460.0
(22) Anmeldetag: 24.07.1999
(51) Int. Cl.: B29B 7/92, B29B 7/76, D01G 1/04

(54) **Vorrichtung zur Herstellung eines mit Naturfasern durchsetzen Gemisches aus chemisch reaktiven Kunstoffkomponenten.**
Device for the preparation of a chemical reactive plastic components' mixture with natural fibers.
Dispositif pour la préparation d'une composition chimique réactive en plastique avec interposition de fibres naturelles.

(30) Priorität: 01.08.1998 DE 19834767
(43) Veröffentlichungstag der Anmeldung: 23.05.2001
(73) Patentinhaber: Krauss-Maffei Kunststofftechnik GmbH, 80997 München (DE)
(72) Erfinder: KRADER, Christoph, D-93142 Maxhütte Haidhof (DE); SÖCHTIG, Wolfgang, D-82110 Germering (DE)
(74) Vertreter: Zollner, Richard
(86) Internationale Anmeldenummer: EP9905310
(87) Internationale Veröffentlichungsnummer: WO00007788

(56) Entgegenhaltungen:
- WO-A-84/04111
- WO-A-93/11288
- DE-A- 19 618 393
- GB-A- 1 401 246

## Beschreibung

Die Erfindung betrifft eine Vorrichtung zur Herstellung eines mit Verstärkungsfasern durchsetzten Gemisches aus chemisch reaktiven Kunststoffkomponenten gemäß Anspruch 1.

Eine bekannte Vorrichtung ist in der DE-196 18 393 A1 offenbart, bei der die Verstärkungsfasern aus Glasfasern oder ähnlich sprödbrüchigen Fasern bestehen. Die Fasern werden dabei von einem Förderwalzenpaar erfaßt und von einem Endlosfaserstrang abgezogen. Eine der Förderwalzen ist mit einem oder mehreren Schneidmessern bestückt, so dass die Fasern beim Durchlauf durch die Förderwalzen in Abschnitte bestimmter Länge unterteilt werden. Die mit den Förderwalzen geschnittenen und beschleunigten Faserabschnitte werden mit hoher Geschwindigkeit durch einen zentrischen Kanal im Reinigungskolben eines Polyurethanmischkopfes in das im Mischkopf erzeugte Gemisch aus chemisch reaktiven Kunststoffkomponenten gefördert. Das mit extrem hoher Geschwindigkeit ablaufende Abtrennen der Endlosfaser in Abschnitte bestimmter Länge kann nach der bekannten Vorrichtung nur bei verhältnismäßig spröden Fasern, wie z.B. Glasfasern erfolgen, bei denen das quer auf den Faserstrang auftreffende Schneidmesser ein sofortiges Brechen der Fasern bewirkt.

Da der Einsatz von Glasfasern in vielen technischen Bereichen, z.B. im Automobil-Innenbereich wegen der problematischen Entsorgung immer umstrittener wird, besteht ein dringendes Bedürfnis, die Glasfasern durch Naturfasern, z.B. Hanffasern, zu ersetzen. Aufgrund der weichelastischen und zähen Konsistenz der Naturfasern, ist das aus der DE-196 18 393 bekannte Schneidwerk zur Erzeugung von Naturfaserabschnitten im erforderlichen Hochgeschwindigkeitsverfahren vollkommen ungeeignet.

Der Erfindung liegt die Aufgabe zugrunde, ein in den Mischkopf einer Polyurethananlage integrierbares Schneidwerk zu schaffen, mit dem Fasern mit weichelastischer und zäher Beschaffenheit (Naturfasern) mit hoher Geschwindigkeit aus einem Endlosstrang abgezogen und nach dem Schneiden in Faserabschnitte beliebiger Länge in den Gemischstrom aus chemisch reaktiven Kunststoffkomponenten im Mischkopf eingebracht werden können.

Die erfindungsgemäße Lösung ist im gekennzeichneten Teil des Anspruch, 1 angegeben. Die Unteransprüche beziehen sich auf weitere vorteilhafte Ausgestaltungen der Erfindung.

Es ergibt sich der Vorteil, daß die im Gegensatz zu Glasfasern sehr weichelastischen Naturfasern durch die Unterdruckbeaufschlagung im Einzugsbereich und durch die Zuführung zu den Schneidkanten in einem Druckgasstrom optimal geradlinig gehalten werden, so daß die geschnittenen Naturfaserabschnitte wie geschnittene Glasfaserbestandteile zusammen mit dem Druckgasstrahl zielgerichtet dem Gemischstrom aus chemisch reaktiven Kunststoffkomponenten zugeführt werden können.

Eine Ausführungsform der Erfindung wird anhand der Zeichnung näher erläutert. Es zeigt:
Fig. 1 in teilweiser Schnittdarstellung die Vorrichtung zum Schneiden von Naturfasern,
Fig. 2 die Verwendung der Vorrichtung nach Fig. 1 am Mischkopf einer Potyurethananlage und
Fig. 3 eine Detailansicht einer anderen Ausführungsform der Vorrichtung zum Schneiden von Naturfasern.

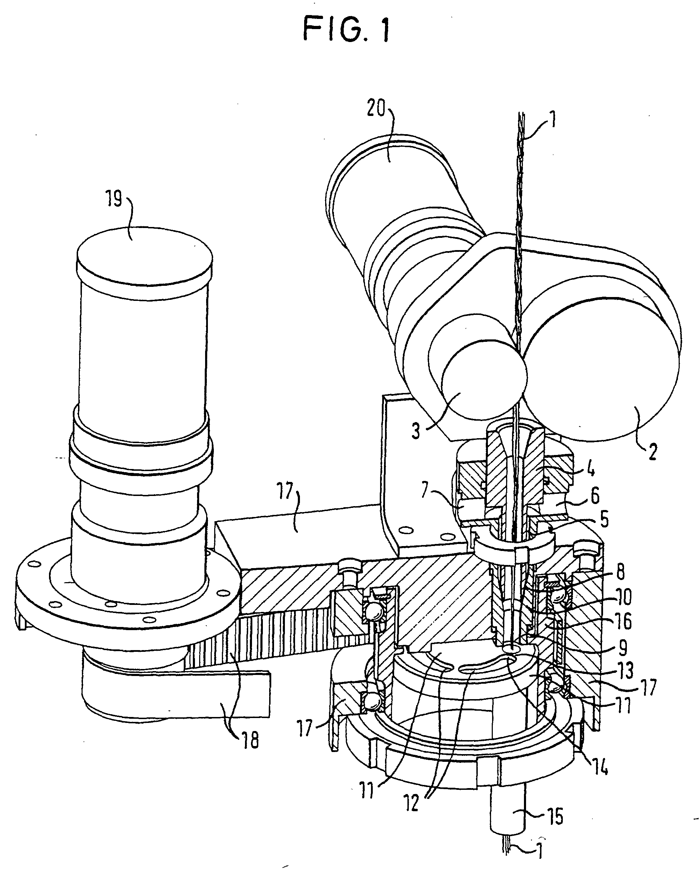

Nach Fig. 1 wird ein aus Naturfasern bestehender Faserstrang 1 von einer Spule (nicht dargestellt) abgespult und von den beiden Förderwalzen 2 und 3 erfaßt und mit hoher Geschwindigkeit in die Trichteröffnung eines nachgeordneten Führungsrohres 4 gefördert. Dieses wird in seinem unteren Bereich unter Einschluß eines im Querschnitt ringförmigen Gasführungskanals 5 von einem Gegenhalterrohr 10 umgeben. Die Druckgaszufuhr zum Gasführungskanal 5 erfolgt über die Zuführöffnungen 6 und 7.

Der Gasführungskanal 5 verengt sich zum Ende des Führungsrohres 4 und erzeugt an dieser Stelle einen in das Führungsrohr 4 hineinreichenden Unterdruck, der den Faserstrang 1 einsaugt und so in einem geradlinig gezogenen Zustand hält. Gleichzeitig strafft die die Ringdüse 8 durchströmende Druckluft in dem an die Ringdüse 8 anschließenden Bereich des Gegenhalterrohres 10 den Faserstrang 1 bis zur Austrittsöffnung 9, mit der sich die Messerscheibe 11 in Scherkontakt befindet.
Die Messerscheibe 11 ist in einer Schneidtrommel 16 auswechselbar befestigt, die wiederum in einem Gehäuse 17 um eine zur Achse des Führungsrohres parallele Achse drehbar gelagert ist. Die Schneidtrommel 16 wird über einen Zahnriemen 18 von einem Antriebsmotor 19 angetrieben, desgleichen werden die Förderwalzen 2,3 von einem Förderwalzen-Antriebsmotor 20 angetrieben.

Die Kanten der Stege 13 zwischen zwei nierenförmigen Ausnehmungen stellen Schneidkanten 14 dar, mit denen der Faserstrang 1 an den ebenfalls als Schneidkanten wirkenden Rändern der Austrittsöffnung 9 des Gegenhalterrohres 10 abgeschert wird. Mit dem Druckgasstrom gelangen die abgescherten Teilstücke des Faserstranges 1 in das Austragsrohr.

Die Länge der Faserstrangteilstücke hängt dabei von der Transportgeschwindigkeit des Faserstranges und der Drehzahl der Messerscheibe 11 ab. Die Menge der geschnittenen Fasem kann danach über die Drehzahl der Förderwalzen 2 und 3 eingestellt werden, während sich die Länge der Fasern aus dem Verhältnis zwischen der Faser-Fördergeschwindigkeit und der Drehzahl der Messerscheibe ergibt. Länge und Menge der Faserteilstücke lassen sich somit in nahezu beliebiger Weise stufenlos verändern.

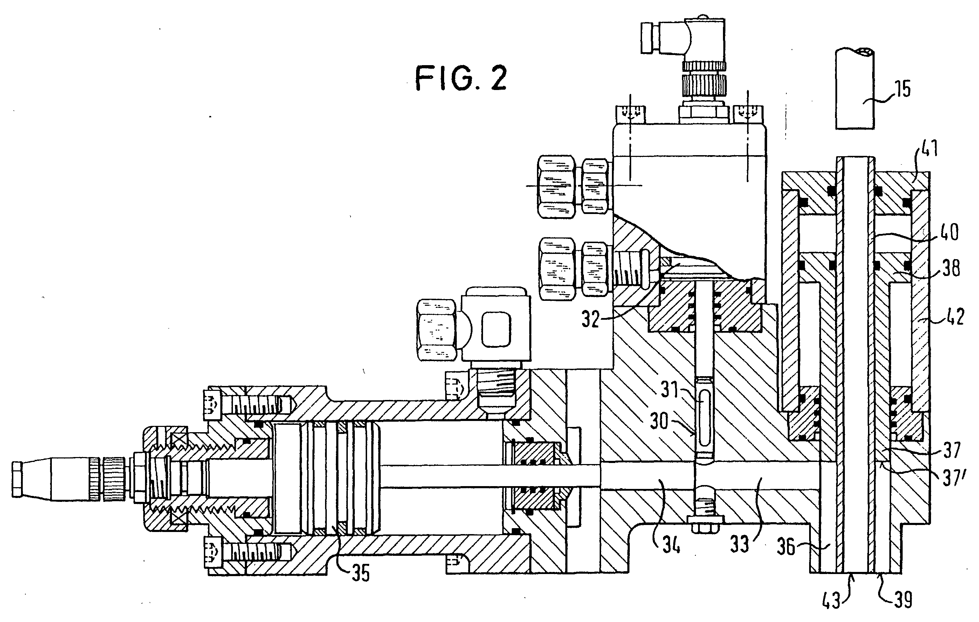

Die Fig. 2 zeigt die Zuordnung der vorbeschriebenen Naturfaser-Schneideinrichtung zum Mischkopf einer Polyurethananlage, in dem chemisch reaktive Kunststoffkomponenten, wie Polyol und Isocyanat zu einem Gemisch aus fließfähigem Kunststoff vermengt werden. Ein derartiger Mischkopf ist aus der DE 196 18 393 bekannt, dessen Zuführ- und Schneideinrichtung nur für Faserstränge aus spröden Fasern, wie Glasfasern, geeignet ist. Für weichelastische und zähe Naturfasern, wie z.B. Hanffasem, ist diese bekannte Vorrichtung nicht verwendbar.

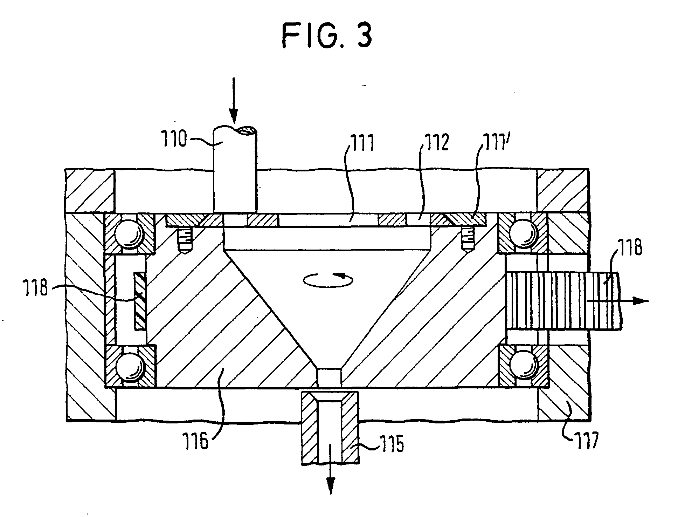

Die Schnittstelle zwischen der Schneid- und Zuführeinrichtung für Naturfasern nach Fig. 1 mit dem Polyurethanmischkopf nach Fig. 2 steht dabei das Tauchrohr 40 dar, in das das Austrittsrohr 15 nach Fig. 1 und das Austrittsrohr 115 nach Fig. 3 einmünden kann, Grundsätzlich können die Austrittsrohre 15 bzw. 115 fest mit dem Tauchrohr 40 verbunden sein oder mit diesem eine einstückige Einheit bilden.

Bei dem in Fig. 2 dargestellten Mischkopf ist in einer Mischkammer 30 ein Steuerkolben 31 angeordnet, der mittels eines Hydraulikkolbens 32 reversierbar in der Mischkammer 30 geführt ist. In die Mischkammer 30 münden senkrecht zur Zeichnungsebene führende Injektionsöffnungen (nicht dargestellt) für die chemisch reaktiven Kunststoffkomponenten. Mit dem Steuerkolben 31 werden die Injektionsöffnungen zeitgleich auf- und zugesteuert, desgleichen erfüllt der Steuerkolben 31 die Funktion, das in der Mischkammer 30 aus den reaktiven Kunststoffkomponenten gebildete Reaktionsgemisch aus der Mischkammer 30 auszutreiben und die Wände der Mischkammer 30 von Reaktionsgemisch zu reinigen.

Im rechten Winkel zur Mischkammer 30 ist eine Beruhigungskammer 33 angeordnet, in der ein erster Reinigungskolben 34 reversierbar geführt ist. Der erste Reinigungskolben 34 ist mittels eines zweiten Hydraulikkolbens 35 betätigbar.

An die Beruhigungskammer 33 schließt sich im rechten Winkel ein Auslaufrohr 36 an, in dem ein zweiter Reinigungskolben 37 reversierbar geführt ist. Der zweite Reinigungskolben 37 ist mittels eines dritten Hydraulikkolbens 38 betätigbar. Das Auslaufrohr 36 mündet mit seiner Austragsöffnung 39 in den Formhohlraum einer Spritzgießform (nicht dargestellt).

Der zweite Reinigungskolben 37 und der dritte Hydraulikkolben 38 werden von einem Tauchrohr 40 zentrisch durchsetzt, das im Zylinderdeckel 41 des Hydraulikzylinders 42 befestigt ist.

Durch das Tauchrohr 40 sind von außen Füllstoffe bis unmittelbar zur Austragsöffnung 43 in das aus dem Auslaufrohr 36 strömende Reaktionsgemisch einführbar.

Das Tauchrohr 40 bildet den zentrischen Kanal durch den die auf eine bestimmte Länge geschnittenen Naturfasern in das Zentrum der Strömung aus reaktivem Kunststoffgemisch eingetragen werden können. Das Tauchrohr 40 bzw. das Austrittsrohr 15 kann mittels einer nicht dargestellten Verstelleinrichtung translatorisch gegenüber dem Auslaufrohr 36 und/oder dem Reinigungskolben 37 beliebig verstellt werden, so daß dessen Austrittsöffnung 43 jede Position zwischen der in der Fig. 2 dargestellten Position und einer Position, in der die Austrittsöffnung 43 mit der Endfläche 37' des Reinigungskolbens 37 bündig ist, einnehmen kann.

Die Fig. 3 zeigt eine andere Ausführungsform einer Schneideinrichtung, in der das Gegenhalterrohr 110 und das Austrittsrohr 115 nicht fluchtend zueinander angeordnet sind, wie in der Ausführungsform nach Fig. 1, sondern zueinander parallel versetzt. Die geschnittenen Faserteile werden über die trichterartig gestaltete zentrische Öffnung der Schneidtrommel 116 in das Austrittsrohr 115 gefördert.

Die Messerscheibe 111 ist auf der Querseite der Schneidtrommel 116 mittels eines Halteringes 111' durch Schrauben leicht auswechselbar befestigt.

### Bezugszeichenliste

- 1: Endlos-Faserstrang
- 2: Förderwalze
- 3: Förderwalze
- 4: Führungsrohr
- 5: Gasführungskanal
- 6: Zuführöffnung
- 7: Zuführöffnung
- 8: Ringdüse
- 9: Austrittsöffnung
- 10,110: Gegenhalterrohr
- 11,111: Messerscheibe
- 111⁺: Haltering
- 12,112: nierenförmige Öffnung
- 13: Stege
- 14: Schneidkante
- 15,115: Austrittsrohr
- 16,116: Schneidtrommel
- 17,117: Gehäuse
- 18,118: Zahnriemen
- 19: Antriebsmotor für Zahnriemen
- 20: Förderwalzen-Antriebsmotor

- 30: Mischkammer
- 31: Steuerkolben
- 32: Hydraulikkolben
- 33: Beruhigungskammer
- 34: erster Reinigunskolben
- 35: zweiter Hydraulikkolben
- 36: Auslaufrohr
- 37: zweiter Reinigungskolben
- 38: dritter Hydraulikkolben
- 39: Austragsöffnung
- 40: Tauchrohr

- 41: Zylinderdeckel
- 42: Hydraulikzylinder
- 43: Austrittsöffnung des Tauchrohres

## Patentansprüche

1. Vorrichtung zur Herstellung eines mit Verstärkungsfasern durchsetzten Gemisches aus chemisch reaktiven Kunststoffkomponenten, insbesondere Mischkopf einer Polyurethananlage, mit einer Mischkammer (30) zur Vermischung der chemisch reaktiven Kunststoffkomponenten, einem der Mischkammer (30) nachgeordneten Auslaufrohr (36), in dem ein Reinigungskolben (37) reversierbar gelagert ist, der einen zentrischen Kanal aufweist, der das Austrittsrohr (15, 115) einer Einrichtung zum Schneiden von Verstärkungsfasern darstellt, mit einer Fördereinrichtung, mit der die Verstärkungsfasern aus einem Endlos-Faserstrang abgezogen und der Einrichtung zum Schneiden zugeführt werden, **dadurch gekennzeichnet, dass** die Einrichtung zum Schneiden aus einem Schneidwerk für Naturfasern besteht, das ein Führungsrohr (4) für die Naturfasern aufweist, das mit einem Gegenhalterrohr (10) einen im Querschnitt ringförmigen Gaszuführungskanal (5) für eingeleitetes Druckgas einschließt und das vor dem Ende des Gegenhalterrohres (10) eine Ringdüse (8) bildet, wobei der Naturfaserstrang (1) anschließend nur vom Endstück des Gegenhalterrohres (10) geführt ist, an dessen Austrittsöffnung (9) quer zur Achse des Gegenhalterrohres (10) ein oder mehrere Messerelemente im Scherkontakt mit der Endfläche des Gegenhalterrohres (10) vorbeibewegbar sind und dass den Messerelementen das Austrittsrohr (15,115) nachgeordnet ist.

2. Vorrichtung nach Anspruch 1, **dadurch gekennzeichnet, daß** der zentrische Kanal des Reinigungskolbens durch dessen Betätigungskolben verläuft und von einem fest mit dem Mischkopfgehäuse verbundenen Rohr (40) durchsetzt wird, in das das Austrittsrohr (15,115) mündet.

3. Vorrichtung nach Anspruch 2, **dadurch gekennzeichnet, daß** das den Reinigungskolben (37) und dessen Betätigungskolben (38) durchsetzende und fest mit dem Mischkopfgehäuse verbundene Rohr (40) fest mit dem Austrittsrohr (15,115) verbunden ist.

4. Vorrichtung nach einem der Ansprüche 1 bis 3, **dadurch gekennzeichnet, daß** das Messerelement aus einer Messerscheibe (11,111) besteht, die um eine parallel zur Achse des Gegenhalterrohres (10,110) gelegene Achse antreibbar ist und die nierenförmige Durchtrittsöffnungen ((12,112) aufweist, deren eine oder beide enge Rundungen als Schneidkanten ausgebildet sind.

5. Vorrichtung nach Anspruch 4, **dadurch gekennzeichnet, daß** die Messerscheibe (111) mittels eines Halteringes (111') auswechselbar an einer Schneidtrommel (116) befestigt ist, die eine zentrische Öffnung aufweist, die sich nach oben konisch zu allen Durchtrittsöffnungen (112) der Messerscheibe (111) erweitert und nach unten zu einer in das Austrittsrohr (115) mündenden Öffnung verjüngt.

6. Vorrichtung nach Anspruch 5, **dadurch gekennzeichnet, daß** die Schneidtrommel (16,116) in einem Gehäuse (17,117) gelagert ist, das den Antrieb für die Schneidtrommel (16,116) trägt und einen Ausschnitt für den die Schneidtrommel (16,116) antreibenden Zahnriemen (18,118) aufweist.

## Claims

1. Device for the preparation of a mixture of chemically reactive plastic components interspersed with reinforcing fibres, in particular mixing head of a polyurethane plant with a mixing chamber (30) for mixing the chemically reactive plastic components, a discharge tube (36) arranged downstream of the mixing chamber (30), in which tube a cleaning plunger (37) having a central duct is mounted in a reciprocating manner, the duct forming the outlet tube (15, 115) of a device for cutting reinforcing fibres, with a conveying device with which the reinforcing fibres are drawn off from a continuous fibre strand and supplied to the device for cutting, **characterised in that** the device for cutting consists of a cutter for natural fibres comprising a guide tube (4) for the natural fibres, which with a holding tube (10) encloses a gas supply duct (5) annular in cross-section for introduced compressed gas and forms an annular die (8) upstream of the end of the holding tube (10), the natural fibre strand (1) subsequently being guided only by the end piece of the holding tube (10), it being possible for one or more blade elements to pass the outlet aperture (9) thereof transversely to the axis of the holding tube (10) and in shearing contact with the end face of the holding tube (10), and **in that** the outlet tube (15, 115) is arranged downstream of the blade elements.

2. Device according to claim 1, **characterised in that** the central duct of the cleaning plunger extends through the actuating plunger thereof and is penetrated by a tube (40) rigidly connected to the mixing head housing, into which tube (40) the outlet tube (15, 115) opens.

3. Device according to claim 2, **characterised in that** the tube (40) penetrating the cleaning plunger (37) and the actuating plunger (38) thereof and rigidly connected to the mixing head housing is rigidly connected to the outlet tube (15, 115).

4. Device according to any of claims 1 to 3, **characterised in that** the blade element consists of a cutter disc (11, 111) which can be driven about an axis located parallel to the axis of the holding tube (10, 110) and comprises kidney-shaped through-apertures (12, 112), one or both narrow rounded portions of which are designed as cutting edges.

5. Device according to claim 4, **characterised in that** the cutter disc (111) is replaceably fastened by means of a holding ring (111') to a cutting drum (116) comprising a central aperture widening conically upwards toward all through-apertures (112) of the cutter disc (111) and tapering downwards toward an aperture ending in the outlet tube (115).

6. Device according to claim 5, **characterised in that** the cutting drum (16, 116) is mounted in a housing (17, 117) carrying the drive for the cutting drum (16, 116) and comprising a cut-out for the toothed belt (18, 118) driving the cutting drum (16, 116).

## Revendications

1. Dispositif pour la préparation d'une composition chimique réactive en plastique avec interposition de fibres naturelles, en particulier tête mélangeuse d'une installation de polyuréthane, avec une chambre de mélange (30) servant à mélanger la composition chimique réactive en plastique, avec un tube d'écoulement (36) disposé en aval de la chambre de mélange (30), dans lequel est disposé de manière réversible un piston de nettoyage (37) muni d'un canal central, qui constitue le tube de sortie (15, 115) d'un dispositif de découpe de fibres de renforcement et avec un dispositif de transport, avec lequel les fibres de renforcement sont retirées d'un écheveau continu de fibres et sont amenées au dispositif de découpe des fibres, **caractérisé en ce que** le dispositif de découpe se compose d'un mécanisme de découpe de fibres naturelles comprenant un tube de guidage (4) pour les fibres naturelles qui, avec un tube de maintien (10), constitue un canal d'amenée de gaz ayant une section de forme annulaire (5) pour une introduction de gaz sous pression et qui forme devant l'extrémité du tube de maintien (10) une buse annulaire (8), l'écheveau de fibres naturelles (1) étant ensuite uniquement guidé par l'embout du tube de maintien (10), devant l'ouverture de sortie (9) duquel un ou plusieurs élément(s) de coupe peut(peuvent), perpendiculairement à l'axe du tube de maintien (10), passer en contact de cisaillement avec la surface d'extrémité du tube de maintien (10) et **en ce que** le tube de sortie (15, 115) est disposé après les éléments de coupe.

2. Dispositif selon la revendication 1, **caractérisé en ce que** le canal central du piston de nettoyage passe à travers son piston d'actionnement et est traversé par un tube (40) relié de manière fixe avec le boîtier de la tête de mélange, dans lequel aboutit le tube de sortie (15, 115).

3. Dispositif selon la revendication 2, **caractérisé en ce que** le tube (40) traversant le piston de nettoyage (37) et son piston d'actionnement (38) et fixé au boîtier de la tête de mélange est relié de manière fixe avec le tube de sortie (15, 115).

4. Dispositif selon l'une des revendications 1 à 3, **caractérisé en ce que** l'élément de coupe se compose d'une lame de couteau (11, 111), qui peut être entraînée autour d'un axe disposé parallèlement à l'axe du tube de maintien (10, 110) et qui comprend des ouvertures de passage réniformes (12, 112), dont l'un des arrondis étroits est ou dont les deux arrondis étroits sont réalisé(s) comme bord(s) de coupe.

5. Dispositif selon la revendication 4, **caractérisé en ce qu'**à l'aide d'une bague de maintien (111') la lame de couteau (111) est fixée de manière interchangeable à un tambour de coupe (116), lequel comprend une ouverture centrale, qui s'étend en forme de cône vers le haut en direction de toutes les ouvertures de passage (112) de la lame de couteau (111) et qui se rétrécit vers le bas en direction d'une ouverture aboutissant dans le tube de sortie (115).

6. Dispositif selon la revendication 5, **caractérisé en ce que** le tambour de coupe (16, 116) est logé dans un boîtier (17, 117), qui porte l'entraînement pour le tambour de coupe (16, 116) et qui comprend une découpe pour la courroie crantée (18, 118) entraînant le tambour de coupe (16, 116).
